# EUROPEAN PATENT SPECIFICATION

(11) **EP 2 934 993 B1**
(45) Date of publication and mention of the grant of the patent: **16.03.2016**
(21) Application number: 12813862.5
(22) Date of filing: 21.12.2012
(51) Int. Cl.: B62K 3/00, B62K 3/10, B62K 5/06, B62K 5/08, B62K 5/05, B62M 6/40

(54) **HUMAN POWERED LAND VEHICLE**
DURCH MENSCHENKRAFT ANGETRIEBENES LANDFAHRZEUG
VEHICULE TERRESTRE À PROPULSION HUMAINE

(43) Date of publication of application: 28.10.2015
(73) Proprietor: Recticel N.V., 1140 Brussels (BE)
(72) Inventor: BRACKE, Kris, B-9230 Wetteren (BE); DE WINTER, Hugo, B-9230 Wetteren (BE); VERMEULEN, Michel, B-9031 Drongen (BE)
(74) Representative: Haverkamp, Jens
(86) International application number: PCT/EP2012/076733
(87) International publication number: WO 2014/094888

(56) References cited:
- DE-A1- 19 841 780
- US-A- 5 069 469

## Description

The invention relates to a human powered land vehicle with two steered front wheels and one rear wheel driven by a drive train, which drive train incorporates a human powered actuator to be actuated for propulsion of the vehicle by a person driving the vehicle and kinematically coupled to a driven wheel for propulsing the vehicle in at least one driving direction and which vehicle further disposes of a non-human powered actuator arranged to drive at least one of the wheels of the vehicle, and with at least one longitudinal beam and a cross-beam, whereas the rear wheel is connected to the longitudinal beam and the front wheels are supported by the cross-beam and whereas at least part of the drive train is being housed within the longitudinal beam, a seat is supported by the longitudinal beam and is designed that the person driving the vehicle is in a sitting position.

Typical pedal propulsed land vehicles are bicycles (pedal propulsed land vehicles with two wheels) or tricycles (pedal propulsed land vehicles with three wheels). Apart from the wheelchair type vehicles, tricycles are three-wheeled bicycles, in which the driver typically is positioned in a laying-down position, similar to a two-wheel recumbent bicycle. Such tricycles typically have two front wheels and a rear wheel driven by a pedal drive. The front wheels are steered. Such vehicles may comprise a cover, typically made of a flexible canvas or of a rigid panel such as fibre-reinforced plastic material. Both embodiments may also cover the front of the vehicle. Then a windshield is implemented into such cover.

It is also known from prior art to additionally make use of a motor as an auxiliary drive for propulsing such vehicles. Typically electric motors are used for these purposes. In DE 295 15 188 U1 such kind of vehicle is disclosed. The drive train for propulsing the vehicle with muscular power comprises a pedal drive arranged with its axis in front of the axles of the two front wheels. The pedal drive has a chain as driving means, which in turn drives a drive wheel on the rear wheel. The chain is arranged with a short distance to the longitudinal beam. The motor also drives the rear wheel. The motor drive is coupled to the axle of the rear wheel with a centrifugal clutch. According to this concept, the muscular force and the driving force of the motor are actuating the rear wheel in a parallel manner. Typically, the vehicle is either driven only by muscular force or by using the motor.

This prior art land vehicle comprises a longitudinal beam and a cross-beam. The cross-beam carries the two steered front wheels. The longitudinal beam extends with a section in front of the front wheel. At the foremost end of the longitudinal beam the pedal drive is arranged. The back-wheel is linked to the longitudinal beam by way of a rocker arm connected to the longitudinal beam and movable around a horizontal axis extending in the transverse direction of the vehicle. The rear wheel, being connected by way of a lever to the rest of the longitudinal beam, comprises a spring-damper element. The electric motor is directly coupled to the rear wheel and is hanging on the axle of the rear wheel. The seat for the driver is arranged approximately in the middle between the front wheels and the rear wheel.

The beams of this vehicle are - as this is common in the construction of bicycles - manufactured from tubes.

A human powered land vehicle according to the preamble of claim 1 is disclosed in DE 198 41 780 A1. With the human powered land vehicle according to this document at least part of the drive train is being housed within the longitudinal beam. Further, the longitudinal beam supports a seat. The vehicle and the seat are designed, that the person drives the vehicle in a sitting position.

In particular light-weight human powered vehicles with an auxiliary motor are regarded as promising for future urban mobility to provide the mobility needed and still save conventional fuels. Further, it is regarded as promising, if such kind of vehicles would be easy in handling and provide a certain comfort for the driver. The latter also involves that it should be easy for the driver to enter and exit the vehicle. Easy handling should also involve, that the vehicle may be parked in small spaces and that therefore its overall length shall be kept rather small.

In the light of the prior art sketched-out above and the objectives it is an object of the invention to provide a pedal propulsed land vehicle, which also disposes of an electric motor and with which vehicle the layout is improved.

This technical problem is solved by way of a land vehicle as defined in the introductory part of claim 1, in that the longitudinal beam is principally of a U-shaped form in its cross-section with its longitudinal opening facing groundwards, in that the axis of rotation of the pedal drive is arranged between the two front wheels and with distance to the top of the longitudinal beam and within a pedal drive housing with the pedals being arranged outside this housing.

With this concept it is possible to design for example a pedal propulsed land vehicle, which disposes of an electric motor as non-human powered actuator also arranged to drive for instance the rear wheel as driven wheel, which may not only be designed to show a rather short length, but which may also be designed respecting the requirements as to light-weight and which may provide an unrivalled comfort.

Using a longitudinal beam, which is principally U-shaped in cross-section, not only provides a beam with very good support, strength and stiffness capability, but in itself provides a housing for at least part of the drive train. Also it may provide a housing for hydraulic piping, brake cables, steering elements and electrical wiring.

The longitudinal beam constitutes a good base to support and/or carry other elements of the vehicle. This is for instance a pedal drive housing, which houses the pedal drive and is arranged with distance to the top of the longitudinal beam. A part of the drive train driving the rear wheel will thus be housed in the pedal drive housing and in the inside of the longitudinal beam. It will be understood that the pedals of the pedal drive are outside the pedal drive housing and arranged to be contacted by the feet of a person sitting on the seat to apply the force needed to turn the pedals. Therefore with such arrangement the inside of the vehicle being used by the driver may be free of any parts or elements of the drive train, except the pedals themselves. This not only enhances the comfort in that no driving means like chains, belts or the like need to be exposed within the vehicle and would need to be respected by the driver. This means that, on the one hand the driver is protected against any dirt (e.g. grease or oil), but also on the other hand the drive train is protected from outside contaminations (e.g. splash water, dirt particles). Further, arranging the rotational axis of the pedal drive with distance to the top of the longitudinal beam allows to place a bottom plate beneath the pedals, thus making it possible to design a complete bottom protecting the inside of the vehicle.

In a preferred embodiment of such pedal propulsed land vehicle the drive train is segmented into several drive train segments, one of which is the pedal drive. Between two drive train segments the driving force of a first drive train segment is transferred to a second drive train segment. This feature is in this specific embodiment used to arrange two drive train segments angular to each other and thus to adapt the design of the drive train to the space available. Making use of this concept and integrating this into the chassis of such land vehicle, with a pedal drive housing resting on top of the longitudinal beam, allows to arrange the longitudinal beam in a rather low position. The top of the longitudinal beam may be arranged even lower than the rotational axis of the front wheels. This allows to design a pedal propulsed land vehicle that only requires a little step when entering or exiting the vehicle. The design possibilities sketched out above make it apparent that, when entering or exiting the vehicle no parts of the drive train need to be stepped-over. Virtually the space in front of the driver's seat may be realized similar to the space between the seat and the handlebar of a scooter.

The seat for seating the driver is conceived to accommodate the driver in a sitting position, not in a laying position. This is in many cases more advantageous than a laying position, in particular when driving in a city. First of all, the overall view of a driver in the sitting position is a lot better than in a laying position. Further, when the driver is rested in a sitting position, the distance between the seat and the human powered actuator, for instance a pedal drive can be designed rather small. This allows the human powered actuator to be arranged as far back as being between the two front wheels, allowing reducing the overall length of such vehicle remarkably compared to prior art vehicles of the kind. This length reductionenhances the manoeverability of the vehicle making it for example easier to take sharp curves, for example when entering in a parking lot of small size. Further, the shorter length reduces the overall weight of the vehicle, not only in that the longitudinal beam can be designed shorter, but also in that a cover of the vehicle, which is preferably existent, is shorter and that due to this issue less material is needed. In case the longitudinal opening at the bottom side of the longitudinal beam need to be closed completely or in part, this can be done by applying one or more light-weight covers, which do not need to meet any strength requirements. As the longitudinal beam is housing a part of the drive system, the therefore needed height of this beam already provides substantial vertical stiffness.

Due to the typically low arrangement of the longitudinal beam within the vehicle, the cross-beam supporting the front wheels carries front wheel support parts, which extend from the cross-beam in a vertical direction. In one embodiment these front wheel support parts are linked with each other by a bracket extending in height and in the traverse direction of the vehicle. This bracket may serve as support for other items used or needed in the vehicle, for example to hold one or more battery cases containing batteries to power the electric motor, and also provides extra vehicle stiffness and protects the driver in case of fall over or frontal and/or side collision.

In an embodiment of the invention the longitudinal beam is a sheet-metal construction. Part of such construction is a rear wheel support, to which the rear wheel is mounted. The rear wheel support may be mounted pivotally movable around a vertical axis to the adjacent parts of the longitudinal beam allowing the rear wheel to be steered. Such steering action is linked to the steering action applied to the front wheels in that the rear wheel is steered in the opposite direction. Typically such steering action acting on the rear wheel is only a fraction of the steering action applied to the front wheels. Typically the possible steering action of the rear wheel will be limited to a few degrees deviating from the neutral position. For optimization of space and weight distribution of the vehicle, according to one embodiment the seat is arranged on top or approximately on top of the electric motor, preferably in the longitudinal extension of the vehicle in front of the rear wheel. Arranging the electric motor in the longitudinal direction of the vehicle in front of the rear wheel, which is in contrast to prior art vehicles of the kind, enhances the weight distribution within the vehicle, bringing the weight more to the centre of the vehicle. This results in a better driving comfort and easier handling of the vehicle.

The longitudinal beam may also be used to attach and hold a rear support extending over the rear wheel. Such rear support may for instance be used to fasten a cover and may be used as a support for luggage or for a child seat.

Further advantages will become apparent from the description of an embodiment of the invention with reference to the figures. These show:
- **Fig. 1:**: a schematic side view with parts cut away of a pedal propulsed land vehicle,
- **Fig. 2:**: a perspective view of the chassis of the vehicle of figure 1 from a first point of view,
- **Fig. 3:**: another perspective view of the chassis of the vehicle depicted in figure 1 from another point of view,

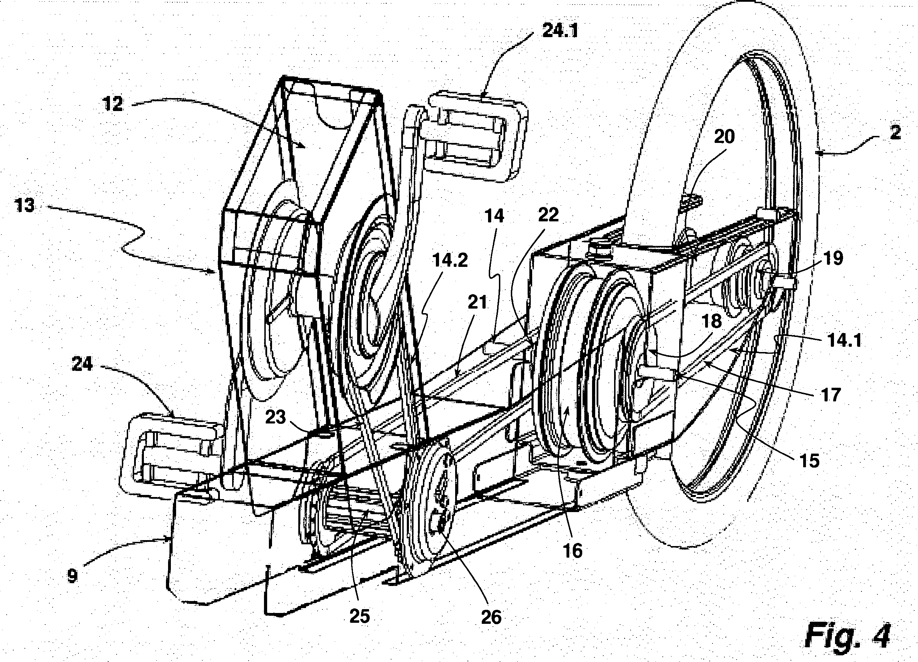

- **Fig. 4:**: a close-up of the power train of the vehicle of figures 1 to 3 with the components housing the drive train being depicted in a transparent mode, and
- **Fig. 5:**: a perspective view showing the vehicle from its bottom side.

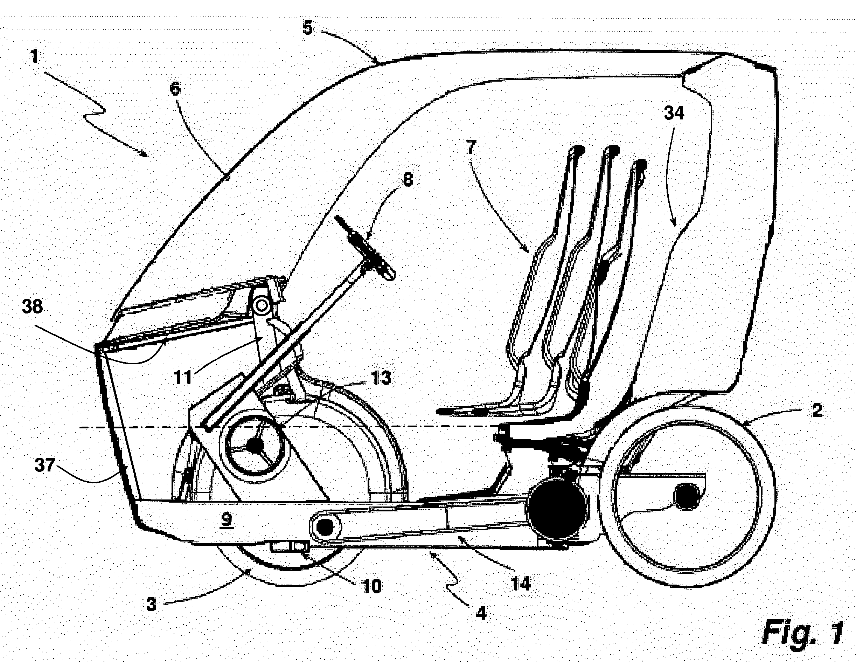

A pedal propulsed land vehicle 1 designed to enhance in particular urban mobility is designed to have three wheels. In the inside side view of figure 1 the rear wheel 2 and the right front wheel 3 are to be seen. The wheels 2, 3 are borne on a chassis 4, which will be described later. The chassis 4 is covered by a cover 5. The cover 5 is manufactured of plastic material, which may be fiber-reinforced. The cover depicted in figure 1 covers the chassis 4 as to the front, the top and the back. The right side and the left side are kept open. The front of the cover 5 is translucent. This wind shield part of the cover 5 is identified with reference numeral 6. The backside of the cover 5 incorporates a rear window.

The chassis 4 supports a seat 7, which is depicted in figure 1 in three of its possible positions. The positions of the seat 7 alter as to their height and their position with respect to the longitudinal extension of the vehicle 1.

The two front wheels 3 of the vehicle 1 are steered. The steering gear comprises a steering wheel 8, which is connected in a not depicted manner to a steering gear steering the front wheels 3.

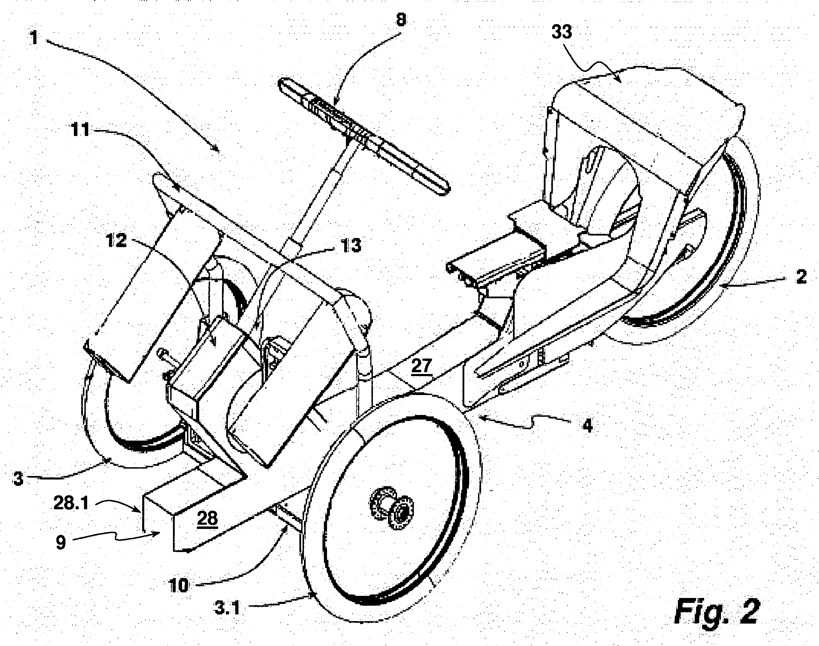

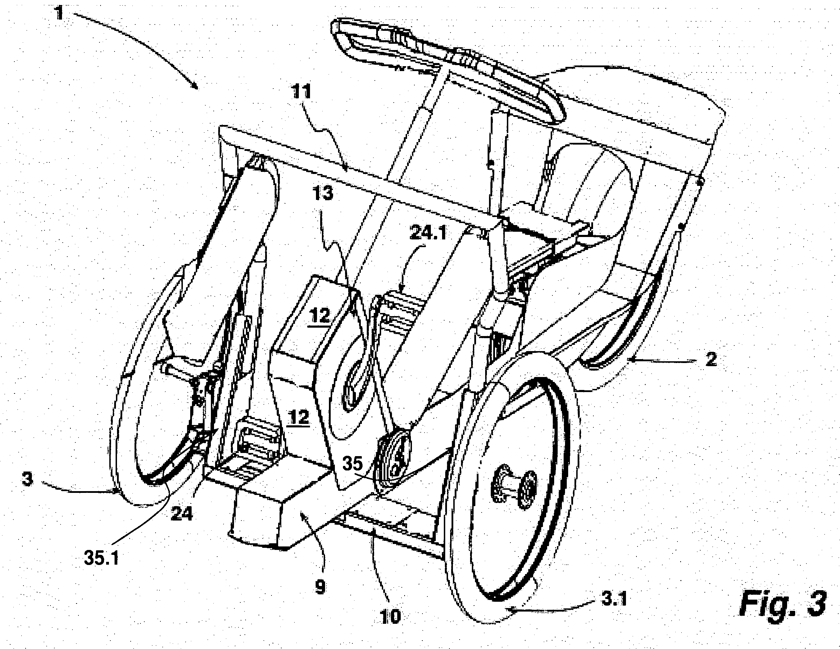

The chassis 4 of the vehicle 1 disposes of a central beam 9 extending in longitudinal direction from the front of the vehicle 1 to the axle of the rear wheel 2. The longitudinal beam 9 is U- or C-shaped in cross-section, with its longitudinal opening facing groundwards. Attached to the longitudinal beam 9 is a cross-beam 10 extending width-wise to the vehicle. The cross-beam 10 carries the front wheels 3, 3.1 (see figures 2, 3). Mounted on the cross-beam 10 is a mounting bracket 11 linking the bearings of the front wheels 3, 3.1 over the topside of the beam 9.

Mounted on the topside of the beam 9 between the two front wheels 3, 3.1 is a pedal drive housing 12, also bearing a pedal drive 13.

The arrangement of the pedal drive 13 within the housing 12 resting on the topside of beam 9 may better be seen in figure 3. Figure 3 also allows a better view to the cross-beam 10 and the mounting bracket 11. Fig 3 further shows that the front wheels are mounted to have a negative run-over.

The vehicle 1 has a power train to drive the rear wheel 2, which power train is in the depicted embodiment divided into three drive train segments 14, 14.1, 14.2. A first drive train segment 14 drives the axle 15 of an electric motor 16. The axle 15 of the electric motor 16 drives the rear wheel 2 via the second drive train segment 14.1. The driving means of the second drive train segment 14.1 is in the depicted embodiment a chain 17 receiving its movement by rotation of the axle 15. Therefore, the chain 17 is driven by a chain wheel 18 sitting on the axle 15. A second chain wheel 19 is arranged on the axle of the rear wheel 2 to receive the driving force. Incorporated into the axle of the rear wheel 2 is a gear hub 20. The driving force received by the chain wheel 19 is transferred through the gear hub 20 and then brings the rear wheel 2 into rotational movement. The gear hub 20 may be actuated by the driver.

The first drive train segment 14 comprises a chain 21 as driving means driving a chain wheel 22 also sitting on the axle 15 of the electric motor 16. The chain wheel 22 is a free-wheel. Therefore, driving force may only be transferred from the chain 21 to the axle 15 in one direction of rotation. This is the direction for propulsing the vehicle 1 into a forward movement. The first drive train segment 14 is itself driven by a third drive train segment 14.2, which incorporates the pedal drive 13. The driving means of the third drive train segment 14.2 again is a chain 23. The chain 23 is driven by rotating the two pedals 24, 24.1 of the pedal drive 13 around their axle and thus driving a chain wheel, which in turn drives the chain 23. As to be seen in the figures, both drive train segments 14, 14.2 are arranged angular to each other by arrangement of the housing 12, enclosing the third drive train segment 14.2, angular to the beam 9, enclosing the first drive train segment 14. In the embodiment disclosed both drive train segments 14, 14.2 enclose an obtuse angle. This arrangement allows - which might best be seen in the inside view of the vehicle 1 according to figure 1 - to arrange the first drive train segment 14 within the beam 9 rather low to the ground but still have the axis of the pedal drive 13 sufficiently high for good and efficient pedalling as well as for comfort reasons. Therefore, this arrangement allows to have an easy access into the vehicle, thus providing for an easy entering and an easing exiting of the vehicle. The step to be taken is rather low. In particular it may be noted, that inside the vehicle nothing is in the way between the seat 7 and the pedal drive 13. As further to be seen from figure 1, the height of the beam 9 is basically arranged below the axis of rotation of the two front wheels 3, 3.1 and the rear wheel 2.

In the interface between the two drive train segments 14.2 and 14, which interface is made by an axle 25 with two chain wheels - one to receive the driving force via the chain 23 and one driving the chain 21 bringing the pedal force onto the axle 15 - coupled to axle 25 is a tension sensor 26 sensing the strain on the chain 23 driving the axle 25. The tension sensor 26 senses the tension applied to chain 23, which in turn is dependent on the muscular force applied to the pedal drive 13. The output of the tension sensor 26 is input into a computing device, which in turn actuates the electric motor 16. Depending on the sensed tension of the chain 23 the electric motor 16 is actuated to support propulsion of the vehicle 1.

The electric motor 16 may be actuated in both directions of rotation. In case the vehicle 1 is to be propulsed in reverse motion, then the electric motor 16 will be actuated accordingly. Reversing the vehicle 1 is with the embodiment described not possible using muscular force due to the free wheel 22 on the axle 15 of the electric motor 16. According to another embodiment, the free wheel 22, which induces the driving force of the first drive train segment 14 into the second drive train segment 14.1, may be arranged in such a manner that its free wheel state may be blocked. Such blocking of the free wheel state of this wheel may then be utilized to propulse the vehicle with pedal force also backwards. For the locking actuation of this wheel an electromagnetic actuating device may for example be utilized locking the free wheel state of this wheel as long as the actuating device itself is actuated. Such actuating device could be linked with a forward movement sensor, which output signals could be utilized to have this wheel be put back in its free wheel state as soon as a forward motion of the vehicle is detected.

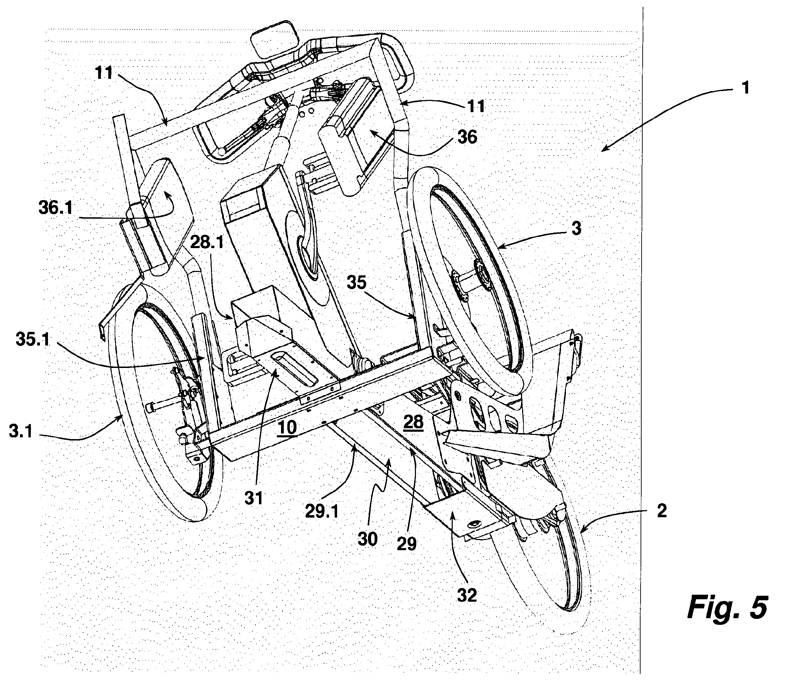

The longitudinal beam 9 of the depicted embodiment is a sheet-metal construction. The longitudinal beam 9 provides a top 27 and two side parts 28, 28.1 (see for example figures 2 and 5). In the depicted embodiment the side parts 28, 28.1 each have a lower flange 29, 29.1 arranged angular in the direction of the longitudinal opening 30 of the beam 9. As to be seen in figure 5, the longitudinal beam is principally of a U-shaped form in its cross-section with its longitudinal opening 30 facing groundwards. The longitudinal opening is covered by a removable bottom plate in order to form a closed section for optimal torsional stiffness. The removable bottom plate further provides simultaneously protection of the incorporated driving elements as well as easy access for assembly and maintenance. Figure 5 shows the longitudinal beam 9 without the attached removable bottom plate, thus allowing an insight into the opening 30.

The front part in front of the cross-beam 10 is covered by a cover 31 material. Another cover 32 is arranged to protect the electric motor 16 and its chain wheels 18, 22 sitting on the axle 15. The cover 32 is arranged pivotally with respect to the longitudinal beam 9 for easy access to the electric motor 16 and to dismount the whole rear structure. The cover 32 is to be turned around a horizontal axis crossing the front ends of the sides of the cover 32.

The design of the longitudinal beam 9 with its U-shaped cross-section gives not only the desired strength and stability to the vehicle 1 but also serves as a good support for attaching other parts of the vehicle 1 to it, such as the cross-beam 10, the pedal drive housing 12, but also the rear support 33 extending over the rear wheel 2. The rear support 34 serves to attach the cover 25 and also to provide for a luggage compartment 33 behind the driver's seat 7 (see figure 1).

To be seen in figure 5 is also the arrangement of the bracket 11 linking to front wheel support parts 35, 35.1, on which the front wheels 3, 3.1 are borne. The front wheel support parts 35, 35.1 are needed because of the low arrangement of the longitudinal beam 9 and the higher position of the rotational axis of the front wheels 3, 3.1 with respect to the cross-beam 10. The bracket 11 not only reinforces the front wheel support parts 35, 35.1 but also serves besides its functionality to hold battery cases 36, 36.1 for the protection of the inside of the vehicle 1. The battery cases 36, 36.1 contain batteries powering the electric motor 16. The cross-beam 10 is also a sheet-metal construction, just like the front wheel support parts 35, 35.1.

In particular, figures 1 to 3 show, that the front wheels 3, 3.1 and the rear wheel 2 are of a rather small size. This not only enhances manoeverability of the vehicle 1 but also allows to have the pedal drive 13 arranged between the steered front wheels. The rather small sized wheels also support the arrangement of the longitudinal beam 9 in a rather low position enhancing comfort and - because having the weight at a low position - a safe and good driving performance.

The front end of the vehicle 1 is designed to provide a driver protection. As such due to the construction of the vehicle 1 described above the following elements resemble a frame or cage respectively protecting the driver in a very effective manner in case of an accident. This protective cage may best seen on figure 1. This protective cage is made up of the front part of the longitudinal beam 9, which as such is already protective for the driver, a front fender connection beam 37, being attached to the longitudinal beam 9, a dashboard support plate 38 and the mounting bracket 11. With these elements a protective cage is formed enclosing the pedal drive 13 and the drivers feet and part of his legs when working on the pedal drive 13. In an embodiment not depicted in the figures the front part of the longitudinal beam - the front end, to which the fender connection beam is attached - is worked to have the additional functionality of a crash box. Such crash box functionality is used to consume the energy introduced into the vehicle 1 in case of front crash and thus reducing the impact to the driver.

The invention is described by way of one embodiment only. There are further possibilities to work the invention. It is possible for instance to use more than one longitudinal beam or to use a longitudinal beam, which already implies a ground floor of the compartment of the vehicle.

The term U-shape referring to the cross sectional form of the at least one longitudinal beam is to be understood in a broad sense. This also implies C-shape beams and all other beams having a top and connected to the top side parts or side walls respectively enclosing a channel.

In the embodiment disclosed with reference to the figures the longitudinal beam is a profiled sheet metal. Of course, other materials may be used for the design of this beam. For example this beam may be manufactured as a cast or extruded light weight metal work piece, for example manufactured from an aluminium alloy or a fiber reinforced material.

**Reference List**

| | | | |
|---|---|---|---|
| 1 | vehicle | 36, 36.1 | battery case |
| 2 | rear wheel | 37 | fender connection beam |
| 3, 3.1 | front wheel | 38 | dashboard support plate |
| 4 | chassis | | |
| 5 | cover | | |
| 6 | wind shield | | |
| 7 | seat | | |
| 8 | steering wheel | | |
| 9 | beam | | |
| 10 | cross-beam | | |
| 11 | mounting bracket | | |
| 12 | pedal drive housing | | |
| 13 | pedal drive | | |
| 14, 14.1, 14.2 | drive train segment | | |
| 15 | axle | | |
| 16 | electric motor | | |
| 17 | chain | | |
| 18 | chain wheel | | |
| 19 | chain wheel | | |
| 20 | gear hub | | |
| 21 | chain | | |
| 22 | chain wheel | | |
| 23 | chain | | |
| 24, 24.1 | pedal | | |
| 25 | axle | | |
| 26 | tension sensor | | |
| 27 | top | | |
| 28, 28.1 | side part | | |
| 29, 29.1 | flange | | |
| 30 | opening | | |
| 31 | cover | | |
| 32 | cover | | |
| 33 | rear support | | |
| 34 | luggage compartment | | |
| 35, 35.1 | front wheel support part | | |

## Claims

1. Human powered land vehicle with two steered front wheels (3, 3.1) and one rear wheel (2) driven by a drive train, which drive (13) train incorporates a human powered actuator to be actuated for propulsion of the vehicle (1) by a person driving the vehicle (1) and kinematically coupled to a driven wheel for propulsing the vehicle (1) in at least one driving direction and which vehicle further disposes of a non-human powered actuator (16) arranged to drive at least one of the wheels to the vehicle (7), and with at least one longitudinal beam (9) and a cross-beam (10), whereas the rear wheel (2) is connected to the longitudinal beam (9) and the front wheels (3, 3.1) are supported by the cross-beam (10) and whereas at least part of the drive train is being housed within the longitudinal beam (9), a seat (7) is supported by the longitudinal beam (9) and is designed that the person driving the vehicle (1) is in a sitting position, **characterized in that** the longitudinal beam (9) is principally of a U-shaped form in its cross-section with its longitudinal opening (30) facing groundwards, **in that** the axis of rotation of the pedal drive (13) is arranged between the two front wheels (3, 3.1) and with distance to the top (27) of the longitudinal beam (9) and within a pedal drive housing (12) with the pedals (24, 24.1) being arranged outside this housing (12).

2. Vehicle according to claim 1, **characterized in that** a rear wheel support is connected movable around a vertical axis to the adjacent end of the longitudinal beam, whereas the movability of the rear wheel support is limited to a few degrees in each direction departing from the neutral position, and **in that** the movability of the rear wheel support is linked to a steering gear steering the front wheels such that a steering action on the rear wheel support is directed in the opposite direction to the steering direction of the front wheels.

3. Vehicle according to one of the claims 1 or 2, **characterized in that** the section of the longitudinal beam (9) between the pedal drive (13) and the seat (7) is arranged in the vertical extension of the vehicle below the axis of rotation of the front wheels (3, 3.1).

4. Vehicle according to claim 3, **characterized in that** the sitting level of the seat (7) in any of its possible positions is arranged in the vertical extension of the vehicle (1) well above the axis of rotation of the front wheels (3, 3.1).

5. Vehicle according to one of claims 1 to 4, **characterized in that** the housing (12) of the pedal drive (13) with its face facing the seat (7) and the top (27) of the longitudinal beam (9) enclose an obtuse angle.

6. Vehicle according to one of claims 1 to 5, **characterized in that** the outer ends of the cross-beam (10) carry front wheel support parts (35, 35.1) extending in the vertical direction of the vehicle (1) on which parts (35, 35.1) the front wheels (3, 3.1) are mounted.

7. Vehicle according to claim 6, **characterized in that** the front wheel support parts (35, 35.1) arranged at the ends of the cross-beam (10) are linked to each other by a bracket (11) extending over the pedal drive housing (12).

8. Vehicle according to claim 7, **characterized in that** the bracket (11) supports one or more battery cases (36, 36.1) containing batteries to power an electric motor (16).

9. Vehicle according to one of claims 1 to 8, **characterized in that** the electric motor (16) and the seat (7) are arranged on top of each other or at least approximately on top of each other, the seat (7) resembling the upper part of this arrangement.

10. Vehicle according to claim 9, **characterized in that** the seat (7) and the electric motor (16) are arranged in the longitudinal extension of the vehicle (1) in front of the rear wheel (2).

11. Vehicle according to claim 10, **characterized in that** the longitudinal beam (9) carries a rear support (33) extending over the top of the rear wheel (2) and being independent of the rear wheel support.

12. Vehicle according to one of claims 1 to 11, **characterized in that** the vehicle comprises a cover (5).

13. Vehicle according to one of claims 1 to 12, **characterized in that** the longitudinal opening (30) of the longitudinal beam (9) is provided with a removable bottom plate closing the longitudinal opening (30) in its mounted or closed arrangement.

14. Vehicle according to one of claims 1 to 13, **characterized in that** a front section of the vehicle (1) is formed to provide a protective cage.

15. Vehicle according to claim 14, **characterized in that** the protective cage is made up of the front section to the longitudinal beam (9), a fender connection beam (37) connected to the longitudinal beam (9), a dashboard support plate (38) connected to the fender connection beam (37) and connected to a bracket (11) extending in traverse direction of the vehicle (1) being with its ends in connection with the longitudinal beam (9).

16. Vehicle according to 14 or 15, **characterized in that** the front section of the longitudinal beam is designed to dispose of the functionality of a energy absorbing crash box.

## Patentansprüche

1. Durch Menschenkraft angetriebenes Landfahrzeug mit zwei gelenkten Vorderrädern (3, 3.1) und einem von einem Antriebsstrang angetriebenen Hinterrad (2), welcher Antriebsstrang (13) ein durch Menschenkraft betriebenes Bedienteil enthält, das zum Antrieb des Fahrzeugs (1) durch eine das Fahrzeug (1) fahrende Person bedienbar ist und kinematisch mit einem angetriebenen Rad gekoppelt ist, um das Fahrzeug (1) in wenigstens einer Fahrtrichtung anzutreiben, und welches Fahrzeug weiterhin über einen nicht durch Menschenkraft betriebenen Antrieb (16) verfügt, der dazu eingerichtet ist, wenigstens eines der Räder des Fahrzeugs (1) anzutreiben, und mit wenigstens einem Längsträger (9) und einem Querträger (10), wobei das Hinterrad (2) mit dem Längsträger (9) verbunden ist und die Vorderräder (3, 3.1) vom Querträger (10) gestützt sind, und wobei wenigstens ein Teil des Antriebsstrangs innerhalb des Längsträgers (9) aufgenommen ist, ein Sitz (7) von dem Längsträger (9) gestützt ist und so ausgestaltet ist, dass die Person, die das Fahrzeug (1) fährt, sich in einer sitzenden Position befindet, **dadurch gekennzeichnet, dass** der Längsträger (9) im Querschnitt im Wesentlichen U-förmig ist, wobei seine longitudinale Öffnung (30) zum Boden hin weist, dass die Rotationsachse des Pedalantriebs (13) zwischen den zwei Vorderrädern (3, 3.1) und im Abstand zum oberen Ende (27) des Längsträgers (9) und innerhalb eines Pedalantrieb-Gehäuses (12) angeordnet ist, wobei die Pedale (24, 24.1) außerhalb dieses Gehäuses (12) angeordnet sind.

2. Fahrzeug nach Anspruch 1, **dadurch gekennzeichnet, dass** eine Hinterradaufhängung um eine senkrechte Achse beweglich mit dem angrenzenden Ende des Längsträgers verbunden ist, wobei die Beweglichkeit der Hinterradaufhängung auf wenige Grad in jeder Richtung abweichend von der neutralen Position begrenzt ist, und dass die Beweglichkeit der Hinterradaufhängung mit einer Lenkeinrichtung verbunden ist, die die Vorderräder lenkt, so dass ein Steuervorgang an der Hinterradaufhängung in die der Steuerrichtung der Vorderräder entgegengesetzte Richtung gerichtet ist.

3. Fahrzeug nach einem der Ansprüche 1 oder 2, **dadurch gekennzeichnet, dass** der Abschnitt des Längsträgers (9) zwischen dem Pedalantrieb (13) und dem Sitz (7) in vertikaler Ausdehnung des Fahrzeugs unterhalb der Drehachse der Vorderräder (3, 3.1) angeordnet ist.

4. Fahrzeug nach Anspruch 3, **dadurch gekennzeichnet, dass** die Sitzhöhe des Sitzes (7) in jeder seiner möglichen Positionen in der vertikalen Ausdehnung des Fahrzeugs (1) deutlich oberhalb der Drehachse der Vorderräder (3, 3.1) angeordnet ist.

5. Fahrzeug nach einem der Ansprüche 1 bis 4, **dadurch gekennzeichnet, dass** das Gehäuse (12) des Pedalantriebs (13) mit seiner dem Sitz (7) zugewandten Fläche und das obere Ende (27) des Längsträgers (9) einen stumpfen Winkel einschließen.

6. Fahrzeug nach einem der Ansprüche 1 bis 5, **dadurch gekennzeichnet, dass** die äußeren Enden des Querträgers (10) Vorderrad-Aufhängungsteile (35, 35.1) tragen, die sich in der vertikalen Richtung des Fahrzeugs (1) erstrecken, an welchen Teilen (35, 35.1) die Vorderräder (3, 3.1) befestigt sind.

7. Fahrzeug nach Anspruch 6, **dadurch gekennzeichnet, dass** die Vorderrad-Aufhängungsteile (35, 35.1), die an den Enden des Querträgers (10) angeordnet sind, miteinander durch einen Bügel (11) verbunden sind, der sich über das Pedalantrieb-Gehäuse (12) erstreckt.

8. Fahrzeug nach Anspruch 7, **dadurch gekennzeichnet, dass** der Bügel (11) einen oder mehrere Batteriekästen (36, 36.1) stützt, die Batterien zur Versorgung eines Elektromotors (16) enthalten.

9. Fahrzeug nach einem der Ansprüche 1 bis 8, **dadurch gekennzeichnet, dass** der Elektromotor (16) und der Sitz (7) übereinander oder wenigstens ungefähr übereinander angeordnet sind, wobei der Sitz (7) den oberen Teil dieser Anordnung darstellt.

10. Fahrzeug nach Anspruch 9, **dadurch gekennzeichnet, dass** der Sitz (7) und der Elektromotor (16) in der longitudinalen Ausdehnung des Fahrzeugs (1) vor dem Hinterrad (2) angeordnet sind.

11. Fahrzeug nach Anspruch 10, **dadurch gekennzeichnet, dass** der Längsträger (9) einen hinteren Träger (33) trägt, der sich über die Oberseite des Hinterrads (2) erstreckt und unabhängig von der Hinterradaufhängung ist.

12. Fahrzeug nach einem der Ansprüche 1 bis 11, **dadurch gekennzeichnet, dass** das Fahrzeug ein Verdeck (5) umfasst.

13. Fahrzeug nach einem der Ansprüche 1 bis 12, **dadurch gekennzeichnet, dass** die longitudinale Öffnung (30) des Längsträgers (9) mit einer entfernbaren Bodenplatte versehen ist, die in ihrer befestigten oder geschlossenen Anordnung die longitudinale Öffnung (30) verschließt.

14. Fahrzeug nach einem der Ansprüche 1 bis 13, **dadurch gekennzeichnet, dass** ein Frontabschnitt des Fahrzeugs (1) ausgestaltet ist, um einen Schutzkorb zu bilden.

15. Fahrzeug nach Anspruch 14, **dadurch gekennzeichnet, dass** der Schutzkorb gebildet ist aus dem Vorderabschnitt des Längsträgers (9), einem mit dem Längsträger (9) verbundenen Abweiser-Verbindungsträger (37), einer Armaturenbrett-Trägerplatte (38), die mit dem Abweiser-Verbindungsträger (37) verbunden ist und mit einem Bügel (11) verbunden ist, der sich in Querrichtung des Fahrzeugs (1) erstreckt und mit seinen Enden in Verbindung mit dem Längsträger (9) steht.

16. Fahrzeug nach Anspruch 14 oder 15, **dadurch gekennzeichnet, dass** der Vorderabschnitt des Längsträgers dazu ausgelegt ist, über die Funktionalität einer energieabsorbieren Crashbox zu verfügen.

## Revendications

1. Véhicule terrestre à propulsion humaine avec deux roues directrices avant (3, 3.1) et une roue arrière (2) actionnées par un train d'entraînement, ledit train entraînement (13) comportant un actuateur à propulsion humaine pour réaliser la propulsion du véhicule (1) par une personne conduisant le véhicule et couplé cinétiquement à une roue entraînement pour propulser le véhicule (1) dans au moins une direction de conduite, ledit véhicule disposant par ailleurs d'un actuateur à propulsion non humaine (16) prévu pour actionner au moins une des roues du véhicule (7), et comportant au moins un arbre longitudinal (9) avec un arbre transversal (10), la roue arrière (2) étant reliée à l'arbre longitudinal (9) et les roues avant (3, 3.1) étant supportées par l'arbre transversal (10) et au moins une partie du train d'entraînement étant logée dans l'arbre longitudinal (9), un siège (7) étant supporté par l'arbre longitudinal (9) et conçu de telle sorte que la personne qui conduit le véhicule (1) soit en position assise, **caractérisé en ce que** l'arbre longitudinal (9) a essentiellement une forme en U en section transversale, avec son ouverture longitudinale (30) dirigée vers le sol, **en ce que** l'axe de rotation des pédales d'actionnement (13) soit disposé entre les deux roues avant (3, 3.1) et à distance du sommet (27) de l'arbre longitudinal (9) et à l'intérieur d'un logement pour les pédales d'actionnement (12) avec les pédales (24, 24.1) disposées à l'extérieur de ce logement (12).

2. Véhicule selon la revendication 1, **caractérisé en ce que** un support de roue arrière est relié de manière amovible autour d'un axe vertical à l'extrémité adjacente de l'arbre longitudinal, le déplacement du support de roue arrière étant limité à quelques degrés dans chacune des directions à partir de la position neutre, et le déplacement du support de roue arrière étant lié à un mécanisme entraînement contrôlant les roues avant de telle sorte qu'une action d'entraînement du support de roue arrière soit dirigée dans la direction opposée de la direction d'entraînement des roues avant.

3. Véhicule selon lune des revendications 1 ou 2, **caractérisé en ce que** la section de l'arbre longitudinal (9) entre les pédales d'entraînement (13) et le siège (7) est disposée dans l'extension verticale du véhicule sous l'axe de rotation des roues avant (3, 3.1).

4. Véhicule selon la revendication 3, **caractérisé en ce que** le niveau d'assise du siège (7) dans chacune des positions possibles est disposé dans l'extension verticale du véhicule (1) bien au dessus de l'axe de rotation des roues avant (3, 3.1).

5. Véhicule selon l'une des revendications 1 à 4, **caractérisé en ce que** le logement (12) des pédales d'actionnement (13) avec sa partie faisant face au siège (7) et l'extrémité (27) de l'arbre longitudinal (9) comporte un angle obtus.

6. Véhicule selon l'un des revendications 1 à 5, **caractérisé en ce que** l'extrémité extérieure de l'arbre transversal (10) supporte les éléments de support des roues avant (35, 35.1) s'étendant dans le plan vertical du véhicule (1), sur lequel les éléments de support (35, 35.1) des roues avant (3, 3.1) sont montées.

7. Véhicule selon la revendication 6, **caractérisé en ce que** les éléments de support des roues avant (35, 35.1) disposées aux extrémités de l'arbre transversal (10) sont reliées les uns aux autres par un collier (11) s'étendant au-delà du logement des pédales d'actionnement (12).

8. Véhicule selon la revendication 7, **caractérisé en ce que** le collier (11) supporte un ou plusieurs logements de batterie (36, 36.1) contenant des batteries pour alimenter un moteur électrique (16).

9. Véhicule selon l'une des revendications 1 à 8, **caractérisé en ce que** le moteur électrique (16) et le siège (7) sont disposés l'un au dessus de l'autre ou au moins approximativement l'un au dessus de l'autre, le siège (7) constituant la partie inférieure de ce dispositif.

10. Véhicule selon la revendication 9, **caractérisé en ce que** le siège (7) et le moteur électrique (16) sont disposés dans l'extension longitudinale du véhicule (1) en avant des roues arrière (2).

11. Véhicule selon la revendication 10, **caractérisé en ce que** l'arbre longitudinal (9) porte un support arrière (33) s'étendant au-delà de la partie supérieure des roues arrière (2) et indépendant du support des roues arrière.

12. Véhicule selon l'une des revendications 1 à 11, **caractérisé en ce que** le véhicule comporte un capot (5).

13. Véhicule selon l'une des revendications 1 à 12, **caractérisé en ce que** l'ouverture longitudinale (30) de l'arbre longitudinal (9) comporte une plaque de fond amovible pour refermer l'ouverture longitudinale (30) dans sa configuration montée ou fermée.

14. Véhicule selon l'une des revendications 1 à 13, **caractérisé en ce qu'**une partie avant du véhicule (1) est configurée pour fournir une cage protectrice.

15. Véhicule selon la revendication 14, **caractérisé en ce que** la cage protectrice est constituée de la partie avant de l'arbre longitudinal (9), d'un arbre de connexion en forme d'aile (37) relié à l'arbre longitudinal (9), d'une plaque de support de tableau de bord (38) reliée à l'arbre de connexion en forme d'aile (37) et relié à un collier (11) s'étendant dans la direction transversale du véhicule (1), ses extrémités étant reliées à l'arbre longitudinal (9).

16. Véhicule selon les revendications 14 ou 15, **caractérisé en ce que** la partie avant de l'arbre longitudinal est conçue pour disposer des fonctions d'une boite d'écrasement absorbant l'énergie.
